# EUROPEAN PATENT SPECIFICATION

(11) **EP 3 566 007 B1**
(45) Date of publication and mention of the grant of the patent: **10.09.2025**
(21) Application number: 17890345.6
(22) Date of filing: 29.12.2017
(51) Int. Cl.: F24C 3/00, F24C 15/08, A47J 36/26, F24C 3/14

(54) **STOVE**
HERD
RÉCHAUD

(30) Priority: 03.01.2017 US 201762441945 P
(43) Date of publication of application: 13.11.2019
(73) Proprietor: Cascade Designs, Inc., Seattle, Washington 98134 (US)
(72) Inventor: SHERRARD, Earl Gaylon, Seattle, Washington 98014 (US); BUESSELER, Joshua R., Seattle, Washington 98014 (US)
(74) Representative: Carpmaels & Ransford LLP
(86) International application number: PCT/US2017/069079
(87) International publication number: WO 2018/128943

(56) References cited:
- CN-A- 101 280 930
- GB-A- 2 358 918
- JP-A- 2008 057 915
- KR-A- 20160 142 665
- US-A- 3 697 031
- US-A1- 2005 109 330
- US-A1- 2006 180 139
- US-A1- 2014 290 640
- US-A1- 2014 326 230
- US-A1- 2015 267 859
- US-A1- 2015 267 859

## Description

### BACKGROUND

Most legs on which portable devices, such as camping stoves or pots, are supported rotate around a vertical or horizontal axis from a storage position to the desired support position. Some are just removable for storage.

GB2358918 (A) discloses a camp stove wherein the body, generally elongated in shape, is equipped at its outer end with means for being fixed and connected on the tank, and, at its inner end with means for supplying a burner, and two brackets each bearing an articulated telescopic leg mounted sliding relative to the brackets, each leg capable of taking either an operative position, wherein it is extended by being spaced outwards, between the bracket and a horizontal support surface, or in a storing position, wherein it is pivoted and retracted relative to the bracket and extends parallel thereto, each of said two brackets being themselves articulated about a vertical axis and relative to said body so as to be capable of taking either an operative position wherein it is substantially at 120 degrees from the body longitudinal axis, or in a storing position wherein it is folded back against the body.

KR20160142665 (A) relates to a holder for a portable gas burner that includes a tripod and a support leg while being foldable at the edge of the gas burner. On the outer peripheral part of the burner body where a penetration hole is formed vertically, a finger arm with the same angle protrudes to the outside. At the end of the finger arm, a hinge penetration hole is formed. To both vertical sides of the finger arm, the inner lower part of the tripod with a guide hinge hole is inserted and combined while facing each other. To both outer sides of the tripod, a hinge piece with a hinge hole formed on the support leg is inserted and combined while facing each other. Through the hinge hole, the guide hinge hole, and the hinge penetration hole, a hinge pin penetrates and is combined by a clip. By doing so, the holder, by simplifying the combination structure between the tripod and the support leg, can improve productivity, lower the price of the gas burner, and lengthen the use by reinforcing the combination structure.

US2015267859 (A1) discloses a stand for a musical keyboard that is both stable in a deployed configuration and conveniently compact and portable in a collapsed configuration. The separation of the arms and legs may not change in width as the height of the stand is adjusted. The stand has two "floating" V's, one for the arms and one for the legs. These components slide vertically in slots in a central column and are locked in place with clamps that wrap around the column. To adjust the height of the stand, a user loosens either or both the top and/or bottom clamp (arm clamp or leg clamp) and slides the associated floating V up or down along the center column, then re-tightening the clamp when adjustments are finished. For transport and storage, the user loosens each clamp and rotates the arms or legs in, towards the column.

JP 2008 057915 (A) discloses a gas cooking stove for indoor and outdoor use. A gas cooking stove according to Fig. 1 of JP 2008 057915 (A), comprises a stove body and three support legs that support the stove body in a raised state against the ground surface. Three vessel support members are located above the stove body for supporting a cooking vessel. As shown in Fig. 3 of JP 2008 057915, each support leg is provided with a leg switching movable mechanism configured to allow the support leg to be moved from an active configuration wherein the support leg supports the stove body in the raised state to an inactive position, wherein the support leg is tucked under the stove body. Each vessel support member is operably connected to a respective one of the leg switching movable mechanisms such that when a support leg is in the inactive position, the corresponding vessel support member is tucked into the stove body on an opposite side to the support leg (as shown in Fig. 5 of JP 2008 057915). Similarly, when support leg is in the active position the corresponding vessel support member is positioned so as to support a cooking vessel. Each vessel support member comprises a curved slot, wherein each corresponding support leg comprises a pin configured to move within said curved slot; this interaction means that the vessel support member is configured to move in response to movement of the corresponding support leg.

### DESCRIPTION OF THE DRAWING FIGURES

FIGS. 1-2 illustrate a portable-device support apparatus according to a first embodiment of the invention.
FIGS. 3-4 illustrate a portable-device support apparatus according to a second embodiment of the invention.
FIG. 5 illustrates a fuel canister and a portable-device support apparatus according to an embodiment of the invention.

### DETAILED DESCRIPTION

This patent application is intended to describe one or more embodiments of the present invention as defined by the claims.

An embodiment includes support elements, such as legs, that move in a desired path for storage in a confined space. The deployed feet of the legs provide a relatively wide, stable platform to support a load/object, such as a pot. When deployed, the legs stay deployed.

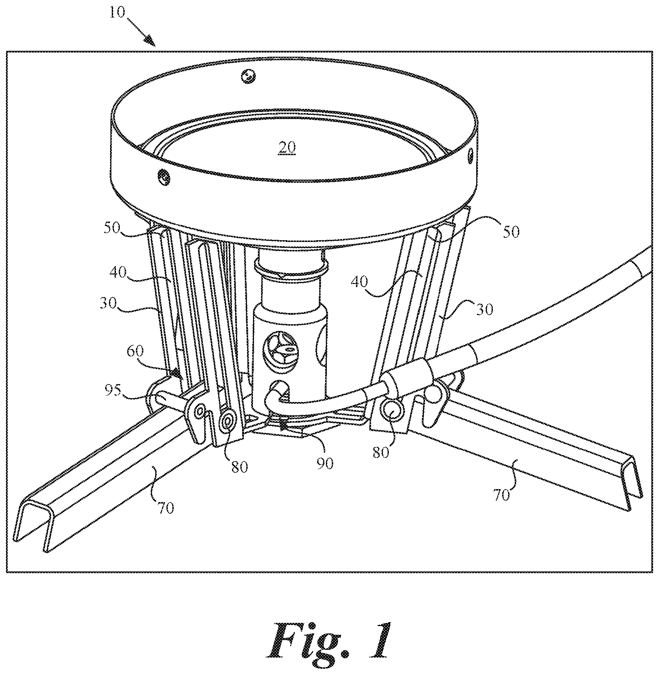

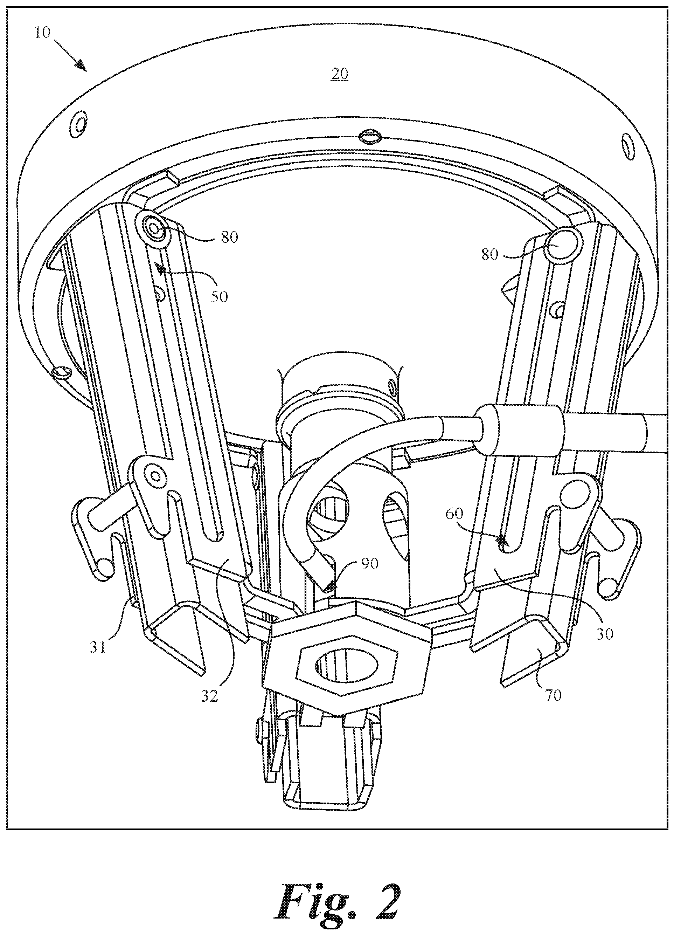

Referring now to FIGS. 1 and 2, shown is a portable-device support apparatus, such as a stove 10, according to a first embodiment of the invention. Stove 10 includes a surface element 20 on which, for example, a cooking pot may be placed for heating.

Stove 10 further includes a plurality of first support elements, such as mounts 30, coupled to the surface element 20. Each mount 30 may be directly coupled to the surface element 20. Each of the mounts 30 has one or more slot portions 40 formed therein. More specifically, each of the mounts 30 may include opposing walls 31, 32 within which the slot portions 40 are formed. Each slot portion 40 has an end 50 proximal to the surface element 20 and an end 60 distal from the surface element. Each slot portion 40 is closed at both the proximal and distal ends 50, 60.

Stove 10 further includes a plurality of second support elements, such as elongate legs 70 and a plurality of fastening devices, such as pins 80. Each leg 70 is coupled to a respective mount 30 by a respective one of the pins 80 positioned within respective slot portions 40. Each pin 80 is configured to translate back and forth within the slot portions 40 between the proximal and distal ends 50, 60. The translational movement of each pin 80 within each slot portion 40 is at least partially rectilinear.

As best shown in FIG. 1, stove 10 has a deployed position in which each pin 80 is at the distal end 60 and each leg 70 extends at an angle from the mount 30 to which each leg is coupled. Stove 10 may further include one or more rivets 95 that, when stove is in the deployed position, serves to stabilize and constrain the position of each leg 70. As best shown in FIG. 2, stove 10 has a storage position in which each pin 80 is at the proximal end 50 and at least a portion of each leg 70 is parallel with at least a portion of the mount 30 to which each leg is coupled. Alternatively, in the stored position each leg 70 is not parallel with at least a portion of the mount 30, but rather at a different angle with respect to the mount, possibly past parallel. When in this stored position, each leg 70 is disposed at least partially within a respective mount 30.

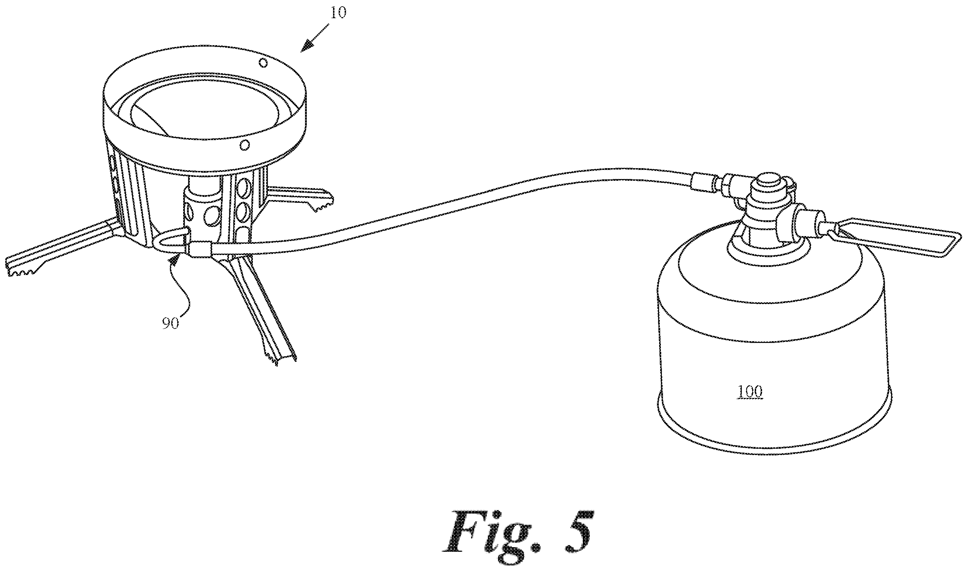

Stove 10 further includes a port assembly 90 configured to receive combustible fuel from a fuel source 100 as is best illustrated in FIG. 5. The surface element 20 may be fluidly coupled to the port assembly 90 and configured to combust the fuel received by the port assembly.

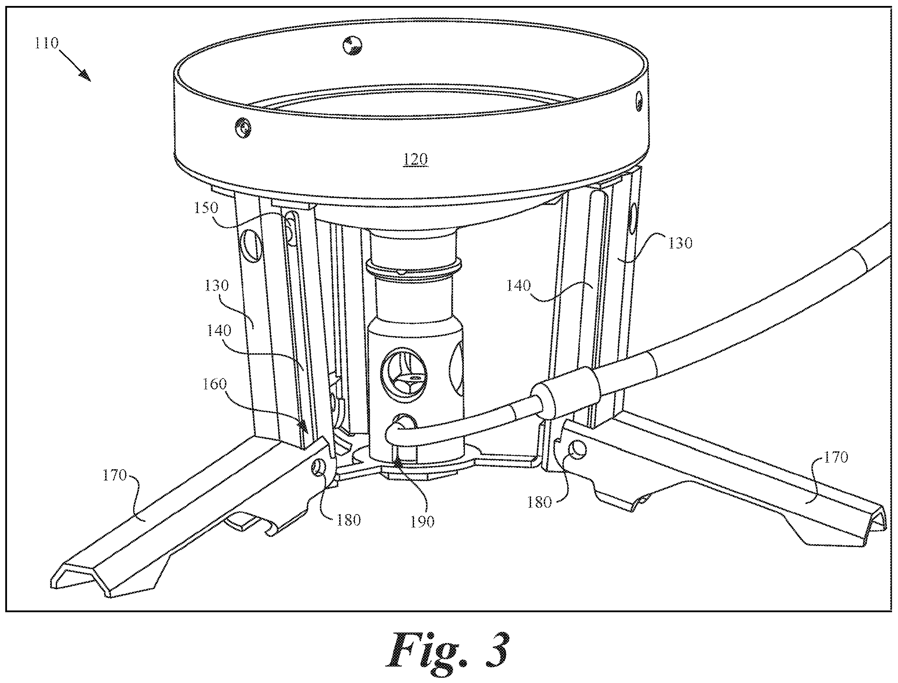

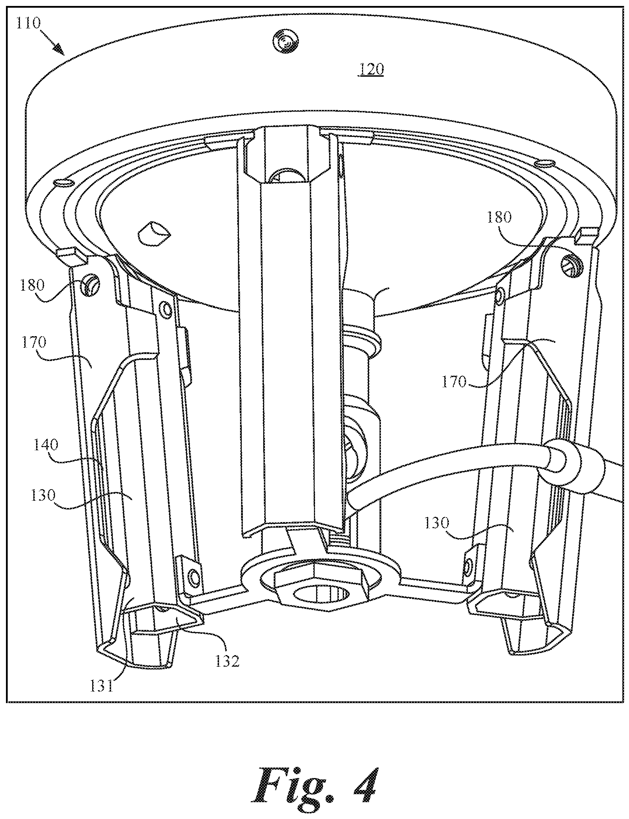

Referring now to FIGS. 3 and 4, shown is a portable-device support apparatus, such as a stove 110, according to a second embodiment of the invention. Stove 110 includes a surface element 120 on which, for example, a cooking pot may be placed for heating.

Stove 110 further includes a plurality of first support elements, such as mounts 130, coupled to the surface element 120. Each mount 130 is directly coupled to the surface element 120. Each of the mounts 130 has one or more slot portions 140 formed therein. More specifically, each of the mounts 130 may include opposing walls 131, 132 within which the slot portions 140 are formed. Each slot portion 140 has an end 150 proximal to the surface element 120 and an end 160 distal from the surface element. Each slot portion 140 is closed at both the proximal and distal ends 150, 160.

Stove 110 further includes a plurality of second support elements, such as elongate legs 170 and a plurality of fastening devices, such as pins 180. Each leg 170 is coupled to a respective mount 130 by a respective one of the pins 180 positioned within respective slot portions 140. Each pin 180 is configured to translate back and forth within the slot portions 140 between the proximal and distal ends 150, 160. The translational movement of each pin 180 within each slot portion 140 is at least partially rectilinear.

As best shown in FIG. 3, stove 110 has a deployed position in which each pin 180 is at the distal end 160 and each leg 170 extends at an angle from the mount 130 to which each leg is coupled. As best shown in FIG. 4, stove 110 has a storage position in which each pin 180 is at the proximal end 150 and at least a portion of each leg 170 is parallel with at least a portion of the mount 130 to which each leg is coupled. When in this stored position, each mount 130 is disposed at least partially within a respective leg 170.

Stove 110 further includes a port assembly 190 configured to receive combustible fuel from a fuel source. The surface element 120 may be fluidly coupled to the port assembly 190 and configured to combust the fuel received by the port assembly.

While the preferred embodiment of the invention has been illustrated and described, many changes can be made without departing from the scope of the invention as defined by the claims. In an alternative embodiment,
stove 10 could be configured such that the slot ends are equidistant from the surface element 20, without an identifiable distal or proximal end. Additionally, and in an embodiment, stove 10 may include springs that load the legs 70 into the deployed position.

## Claims

1. A stove, comprising:
a surface element (20, 120) configured to support placement of a cooking pot for heating, when the apparatus is in a deployed position;
a plurality of first support elements (30, 130) directly coupled to the surface element, each first support element having an end proximal to the surface element and an end distal from the surface element, and each of the first support elements having a slot portion formed therein;
a plurality of second movable support elements (70, 170); and
a plurality of fastening devices (80, 180), **characterized by** each second movable support element being coupled to a respective first support element by a respective one of the fastening devices, wherein:
each of the fastening devices is positioned within a respective slot portion, each fastening device is configured to translate back and forth along a respective one of the first support elements between the proximal and distal ends, each fastening device being configured to translate within the respective slot portion, and
the stove having the deployed position in which each fastening device is at the distal end and each second movable support element extends at an angle from the first support element to which each second movable support element is coupled, and having a storage position in which each fastening device is at the proximal end.

2. The stove of claim 1, wherein, in the storage position, each first support element is disposed at least partially within a respective second movable support element.

3. The stove of claim 1, wherein, in the storage position, each second movable support element is disposed at least partially within a respective first support element.

4. The stove of claim 1, wherein the translational movement of each fastening device is at least partially rectilinear.

5. The stove of claim 1, further comprising a port configured to receive combustible fuel.

6. The stove of claim 5, wherein the surface element is fluidly coupled to the port and configured to combust the fuel received by the port.

7. The stove of claim 1, further comprising a plurality of rivets, each rivet configured to stabilize and constrain a position of a respective one of the second movable support element when the apparatus is in the deployed position.

## Patentansprüche

1. Kocher, umfassend:
ein Flächenelement (20, 120), das dazu ausgestaltet ist, das Platzieren eines Kochtopfs zum Erhitzen zu stützen, wenn die Vorrichtung in einer Einsatzposition ist,
eine Vielzahl von ersten Stützelementen (30, 130), die direkt an das Flächenelement gekoppelt sind, wobei jedes erste Stützelement ein proximal zu dem Flächenelement liegendes Ende und ein distal von dem Flächenelement liegendes Ende hat und wobei jedes der ersten Stützelemente einen darin ausgebildeten Schlitzabschnitt hat,
eine Vielzahl von zweiten beweglichen Stützelementen (70, 170) und
eine Vielzahl von Befestigungsvorrichtungen (80, 180),
**dadurch gekennzeichnet, dass** jedes zweite bewegliche Stützelement über eine jeweilige der Befestigungsvorrichtungen an ein jeweiliges erstes Stützelement gekoppelt ist, wobei:
jede der Befestigungsvorrichtungen in einem jeweiligen Schlitzabschnitt positioniert ist, wobei jede Befestigungsvorrichtung dazu ausgestaltet ist, entlang eines jeweiligen der ersten Stützelemente zwischen dem proximalen und dem distalen Ende hin und herzutranslatieren, wobei jede Befestigungsvorrichtung zum Translatieren in dem jeweiligen Schlitzabschnitt ausgestaltet ist, und
der Kocher die Einsatzposition hat, in der jede Befestigungsvorrichtung an dem distalen Ende ist und sich jedes zweite bewegliche Stützelement in einem Winkel von dem ersten Stützelement, an das jedes zweite bewegliche Stützelement gekoppelt ist, erstreckt, sowie eine Verstauposition, in der jede Befestigungsvorrichtung an dem proximalen Ende ist.

2. Kocher nach Anspruch 1, wobei jedes erste Stützelement in der Verstauposition mindestens teilweise in einem jeweiligen zweiten beweglichen Stützelement angeordnet ist.

3. Kocher nach Anspruch 1, wobei jedes zweite bewegliche Stützelement in der Verstauposition mindestens teilweise in einem jeweiligen ersten Stützelement angeordnet ist.

4. Kocher nach Anspruch 1, wobei die Translationsbewegung jeder Befestigungsvorrichtung mindestens teilweise geradlinig ist.

5. Kocher nach Anspruch 1, ferner umfassend einen Anschluss, der zur Aufnahme von brennfähigem Brennstoff ausgestaltet ist.

6. Kocher nach Anspruch 5, wobei das Flächenelement fluidisch an den Anschluss gekoppelt und zum Verbrennen des von dem Anschluss erhaltenen Brennstoffs ausgestaltet ist.

7. Kocher nach Anspruch 1, ferner umfassend eine Vielzahl von Nieten, wobei jeder Niet dazu ausgestaltet ist, eine Position eines jeweiligen des zweiten beweglichen Stützelements zu stabilisieren und zu beschränken, wenn die Vorrichtung in der Einsatzposition ist.

## Revendications

1. Réchaud, comprenant :
un élément de surface (20, 120) configuré pour supporter le placement d'une marmite pour le chauffage, lorsque l'appareil est dans une position déployée ;
une pluralité de premiers éléments de support (30, 130) directement couplés à l'élément de surface, chaque premier élément de support ayant une extrémité proximale à l'élément de surface et une extrémité distale par rapport à l'élément de surface, et chacun des premiers éléments de support ayant une partie fente formée dans celui-ci ;
une pluralité de seconds éléments de support mobiles (70, 170) ; et
une pluralité de dispositifs de fixation (80, 180),
**caractérisé par** chaque second élément de support mobile étant couplé à un premier élément de support respectif par un respectif des dispositifs de fixation, dans lequel
chacun des dispositifs de fixation est positionné à l'intérieur d'une partie fente respective, chaque dispositif de fixation est configuré pour se translater en va-et-vient le long d'un respectif des premiers éléments de support entre les extrémités proximale et distale, chaque dispositif de fixation étant configuré pour se translater à l'intérieur de la partie fente respective, et
le réchaud a la position déployée dans laquelle chaque dispositif de fixation est à l'extrémité distale et chaque second élément de support mobile s'étend à un angle par rapport au premier élément de support auquel chaque second élément de support mobile est couplé, et ayant une position de rangement dans laquelle chaque dispositif de fixation est à l'extrémité proximale.

2. Réchaud de la revendication 1, dans lequel, dans la position de rangement, chaque premier élément de support est disposé au moins partiellement à l'intérieur d'un second élément de support mobile respectif.

3. Réchaud de la revendication 1, dans lequel, dans la position de rangement, chaque second élément de support mobile est disposé au moins partiellement à l'intérieur d'un premier élément de support respectif.

4. Réchaud de la revendication 1, dans lequel le mouvement de translation de chaque dispositif de fixation est au moins partiellement rectiligne.

5. Réchaud de la revendication 1, comprenant en outre un orifice configuré pour recevoir un fluide combustible.

6. Réchaud de la revendication 5, dans lequel l'élément de surface est fluidiquement couplé à l'orifice et configuré pour effectuer la combustion du fluide combustible reçu par l'orifice.

7. Réchaud de la revendication 1, comprenant en outre une pluralité de rivets, chaque rivet étant configuré pour stabiliser et limiter une position d'un respective du second élément de support mobile lorsque l'appareil est dans la position déployée.
